# EUROPEAN PATENT APPLICATION

(11) **EP 3 816 038 A1**
(43) Date of publication of application: **05.05.2021**
(21) Application number: 20205082.9
(22) Date of filing: 31.10.2020
(51) Int. Cl.: B64C 1/40

(54) **THERMO-ACOUSTIC INSULATION SYSTEM, MODULE, AND AIRCRAFT INCLUDING THE SAME**

(30) Priority: 01.11.2019 US 201962929325 P
(71) Applicant: Bombardier Inc., Dorval, Québec H4S 1Y9 (CA)
(72) Inventor: VOICU, Carmen, Bizard, Québec H9E 1R9 (CA); LANGLOIS, Daniel, Laval, Québec H7K 0A9 (CA); BLAIS, Jean-Francois, Montreal, Québec H3L 3A2 (CA)
(74) Representative: Holmes, Matthew William

(57) **Abstract**

A thermo-acoustic insulation module for an aircraft includes a fiber batt defining an exterior side, an interior side, a thickness between the exterior side and the interior side, and a periphery. The thermo-acoustic insulation module also includes a mass layer disposed at least on the exterior side of the fiber batt, on the interior side of the fiber batt, or between the exterior side and the interior side of the fiber batt. An exterior encapsulating sheet is disposed exteriorly to the exterior side of the fiber batt. Similarly, an interior encapsulating sheet disposed interiorly to the interior side of the fiber batt. A peripheral seam connects the exterior encapsulating sheet to the interior encapsulating sheet adjacent to the periphery of the fiber batt, thereby creating an envelope encapsulating the fiber batt.

## Description

### Field of the Invention

The present disclosure concerns a construction for aircraft insulation and an arrangement for installation of that insulation in an aircraft. More specifically, but not exclusively, the present disclosure concerns the construction of a thermo-acoustic insulation system, a thermo-acoustic insulation module, and an aircraft incorporating the same. This application claims priority from US provisional patent application no. US62/929,325, filed 1st November 2019, the entire contents of which are expressly incorporated by reference herein.

### Description of the Related Art

When designing an aircraft cabin, aircraft designers address a number of comfort issues for passengers including, among them, the temperature within the aircraft cabin and the magnitude of sound within the aircraft cabin.

While the prior art includes examples addressing both temperature and sound control within an aircraft cabin, a desire remains for still further improvements in both temperature and sound control.

### Summary

The present disclosure offers one or more solutions that improve upon thermo-acoustic insulation systems and modules that are known in the prior art.

Aspects of the invention relate to a thermo-acoustic insulation module, to a thermo-acoustic insulation system and to an aircraft, as claimed in the appended claims.

In one embodiment, the present disclosure provides a thermo-acoustic insulation module for an aircraft that includes a fiber batt defining an exterior side, an interior side, a thickness between the exterior side and the interior side, and a periphery. The thermo-acoustic insulation module may also include a mass layer disposed at least on the exterior side of the fiber batt, on the interior side of the fiber batt, or between the exterior side and the interior side of the fiber batt. An exterior encapsulating sheet may be disposed exteriorly to the exterior side of the fiber batt. Similarly, an interior encapsulating sheet may be disposed interiorly to the interior side of the fiber batt. A peripheral seam may connect the exterior encapsulating sheet to the interior encapsulating sheet adjacent to the periphery of the fiber batt, thereby creating an envelope encapsulating the fiber batt.

In one contemplated embodiment of the thermo-acoustic module, the fiber batt comprises a fiberglass nonwoven material.

In another contemplated embodiment of the thermo-acoustic module, the mass layer comprises rubber.

Still further, it is contemplated that the exterior encapsulating sheet is plastic. Similarly, the interior encapsulating sheet may be plastic.

For one contemplated embodiment of the thermo-acoustic module, the peripheral seam extends completely around the periphery of the fiber batt.

It is contemplated that the thermo-acoustic module may include a first localized seam extending a first predetermined distance into the fiber batt from the periphery.

Separately, the thermo-acoustic module may have a second localized seam extending a second predetermined distance into the fiber batt from the periphery.

In addition, the thermo-acoustic module may include a third localized seam surrounding an area in the fiber batt inside of the periphery.

The present disclosure also provides an aircraft that includes a fuselage, a first frame element connected to the fuselage, the first frame element comprising an interior leg, and a fiber batt defining an exterior side, an interior side, a thickness between the exterior side and the interior side, and a periphery. The aircraft may also include a mass layer disposed at least on the exterior side of the fiber batt, on the interior side of the fiber batt, or between the interior side and the exterior side of the fiber batt. An exterior encapsulating sheet may be disposed exteriorly to the exterior side of the fiber batt. An interior encapsulating sheet may be disposed interiorly to the interior side of the fiber batt. A peripheral seam may connect the exterior encapsulating sheet to the interior encapsulating sheet adjacent to the periphery of the fiber batt, thereby creating an envelope encapsulating the fiber batt and defining a blanket edge adjacent to the peripheral seam. A clip may secure the blanket edge to the interior leg of the first frame element.

The present disclosure also provides a thermo-acoustic insulation system for an aircraft. The thermo-acoustic insulation system includes a first frame element connected to the fuselage, the first frame element comprising an interior leg. The thermo-acoustic insulation system may also include a fiber batt defining an exterior side, an interior side, a thickness between the exterior side and the interior side, and a periphery, a mass layer disposed at least on the exterior side of the fiber batt, on the interior side of the fiber batt, or between the interior side and the exterior side of the fiber batt. An exterior encapsulating sheet may be disposed exteriorly to the exterior side of the fiber batt. An interior encapsulating sheet may be disposed interiorly to the interior side of the fiber batt. A peripheral seam may connect the exterior encapsulating sheet to the interior encapsulating sheet adjacent to the periphery of the fiber batt, thereby creating an envelope encapsulating the fiber batt and defining a blanket edge adjacent to the peripheral seam. A clip may secure the blanket edge to the interior leg of the first frame element.

Still further, the thermo-acoustic insulation system may be constructed so that the fiber batt includes a fiberglass nonwoven mat.

In one embodiment, the thermo-acoustic insulation system may be constructed so that the mass layer includes rubber.

For the thermo-acoustic insulation system, the exterior encapsulating sheet may plastic. Similarly, the interior encapsulating sheet also may be plastic.

The thermo-acoustic insulation system may be manufactured so that the peripheral seam extends completely around the periphery of the fiber batt.

In another contemplated embodiment, the thermo-acoustic insulation system may include a first localized seam extending a first predetermined distance into the fiber batt from the periphery.

Alternatively, the thermo-acoustic insulation system may incorporate a second localized seam extending a second predetermined distance into the fiber batt from the periphery.

In one further contemplated embodiment, the thermo-acoustic insulation system may be made with a third localized seam surrounding an area in the fiber batt inside of the periphery.

In this contemplated embodiment, the third localized seam may surround an opening through the fiber batt.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the disclosure will now be described, by way of example only, with reference to the accompanying drawings, in which:
Fig. 1 is graphical cross-section of a thermo-acoustic system for an aircraft interior known in the prior art;
Fig. 2 is graphical cross-section of another thermo-acoustic system for an aircraft interior known in the prior art;
Fig. 3 is a graphical cross-section of a thermo-acoustic system for an aircraft interior according to one embodiment of the present disclosure;
Fig. 4 is an enlarged, graphical cross-section of a portion of the thermo-acoustic system illustrated in Fig. 3, providing enhanced details associated with the clip connecting the second insulation layer to the first frame element;
Fig. 5 is a perspective illustration an interior side of a portion of a first embodiment of a thermo-acoustic insulation module employed in the thermo-acoustic system illustrated in Fig. 3;
Fig. 6 is a cross-section of the thermo-acoustic insulation module illustrated in Fig. 5, the cross-section being taken along line 6-6;
Fig. 7 is a cross-section of the thermo-acoustic insulation module illustrated in Fig. 5, the cross-section being taken along line 7-7;
Fig. 8 is a cross-section of a second contemplated embodiment of the thermo-acoustic insulation module illustrated in Fig. 5;
Fig. 9 is a cross-section of a third contemplated embodiment of the thermo-acoustic insulation module illustrated in Fig. 5;
Fig. 10 is a perspective illustration of one embodiment of a clip according to the present disclosure;
Fig. 11 is a top view of the clip illustrated in Fig. 10;
Fig. 12 is a graphical cross-section of the thermo-acoustic system of the present disclosure where two thermo-acoustic insulation modules are connected to the aircraft frame using the clip illustrated in Fig. 10; and
Fig. 13 is an enlarged, graphical cross-section of the thermo-acoustic system of the present disclosure illustrated in Fig. 12, showing the clip in the installed position.

### Detailed Description of Embodiments

Embodiments of the present invention will now be described. The discussion of specific embodiments is intended to highlight the breadth and scope of the present invention without limiting the invention thereto. Those skilled in the art should appreciate that the present invention may be implemented via one or more equivalents and variations of the embodiments described herein. Those equivalents and variations are intended to be encompassed by the present invention.

In the paragraphs that follow, the present invention is described in connection with its deployment in an aircraft. While the insulation, insulation system, insulation module, and insulation arrangement of the present invention is discussed in connection with an aircraft, the present invention may be employed in other environments including, but not limited to, trains, cars, boats, etc.

In the figures, various aspects of the prior art and the present invention are discussed in connection with the interior of an aircraft and an exterior of the aircraft. The interior is contemplated to be consistent with the aircraft passenger compartment. The exterior is contemplated to be the ambient environment outside of the aircraft.

Various elements and features that are illustrated in the figures are identified by a reference number. Where appropriate, similar elements and features are provided with the same reference numbers. While elements and features that are identified with the same reference numbers are contemplated to share common characteristics from one illustration to the next, it should be understood that the use of the same reference number in different views is not intended to convey that the identified structures are identical in each of the figures.

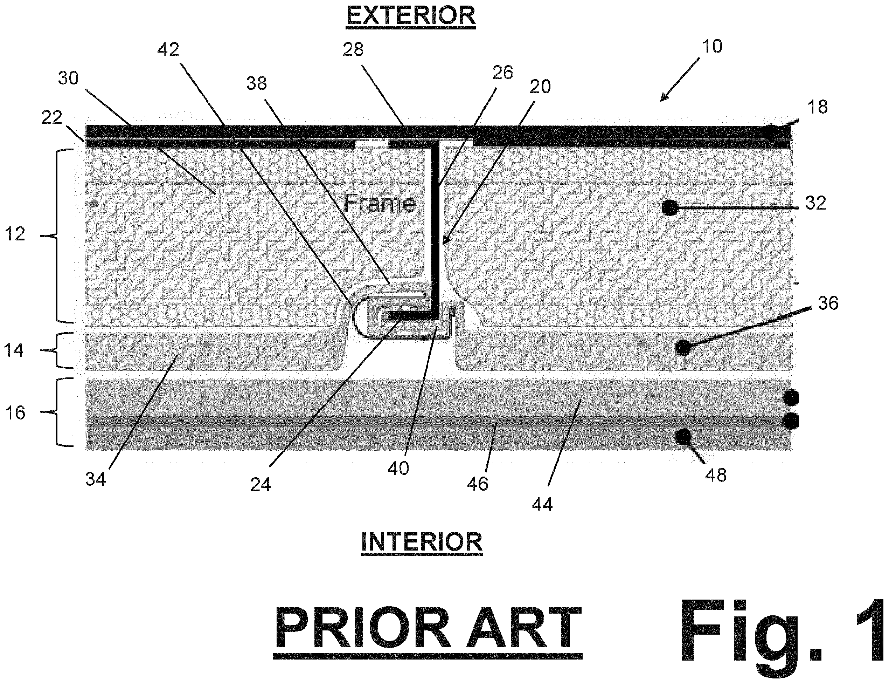

Fig. 1 is a cross-sectional view of a thermo-acoustic system 10 according to one example known in the prior art.

The thermo-acoustic system 10 encompasses three basic elements: (1) a first thermal insulation layer 12, (2) a second thermal insulation layer 14, and (3) an interior panel 16. The thermo-acoustic system 10 is disposed against the interior surface of the fuselage 18 of the aircraft.

In the illustrated embodiment, the fuselage 18 may be constructed from aluminum or an alloy of aluminum. Alternatively, the fuselage 18 may be constructed from a composite material. While these materials are contemplated for the fuselage 18, other materials also may be employed, as should be apparent to those skilled in the art.

The interior surface of the fuselage 18 is contemplated to include one or more first frame elements 20 and one or more second frame elements 22. As shown in Fig. 1, the first frame elements 20 are U-shaped and are attached to the interior surface of the fuselage 18. Being U-shaped, the first frame elements 20 include an interior leg 24, a body 26, and an exterior leg 28. The exterior leg 28 connects to the interior surface of the fuselage 18. The second frame elements 22 are illustrated as reinforcing elements that are connected to the interior surface of the fuselage 18 and extend along the longitudinal axis of the fuselage.

The first thermal insulation layer 12 is illustrated as a single layer that abuts against the interior surface of the fuselage 18. The first thermal insulation layer 12 typically is made from fiberglass or foam.

The second thermal insulation layer 14 abuts against the interior surface of the first thermal insulation layer 12. The second thermal insulation layer 14 also is made from either fiberglass or foam.

In Fig. 1, the first thermal insulation layer 12 includes a first batt 30 and second batt 32. The first and second batts 30, 32 are disposed against the interior surface of the fuselage 18 and, accordingly, provide the first thermal barrier to insulate the aircraft cabin from the temperature of the exterior environment. As should be apparent to those skilled in the art, the interior surface of the fuselage 18 typically is covered with a plurality of the first and second batts 30, 32. At least for this reason, the first thermal insulation layer 12 is referred to as a "layer." As should be apparent, the first thermal insulation layer 12 is not a continuous layer. Instead, the first thermal insulation layer 12 is separated into segments at least by the first frame elements 20 that are disposed on the interior surface of the fuselage 18.

Similarly, the second thermal insulation layer 14 is not a continuous layer. As illustrated in Fig. 1, the second thermal insulation layer 14 includes a first blanket portion 34 and a second blanket portion 36. The first blanket portion 34 includes a first blanket edge 38. Similarly, the second blanket portion 36 includes a second blanket edge 40. The first blanket portion 34 is disposed adjacent to the interior surface of the first batt 30. Similarly, the second blanket portion 36 is disposed adjacent to the interior surface of the second batt 32.

As also illustrated in Fig. 1, the first blanket edge 38 and the second blanket edge 40 are attached to the interior leg 24 via a clip 42. The clip 42 is a U-shaped element, as illustrated.

The interior panel 16 is disposed adjacent to the interior surface of the second thermal insulation layer 14. As shown in Fig. 1, the interior panel 16 includes three layers: (1) an absorptive layer 44, (2) a mass layer 46, and (3) a decorative layer 48. The absorptive layer 44, the mass layer 46, and the decorative layer 48 are constructed as a unitary component that, together, form the interior panel 16. When the interior panel 16 is installed in the aircraft, the absorptive layer 44 is disposed adjacent to the second thermal insulation layer 14. The decorative layer 48 forms the interior surface of the interior panel 16. The mass layer 46 is sandwiched between the absorptive layer 44 and the decorative layer 48.

The absorptive layer 44 may be made from felt or fiberglass.

The mass layer 46 may be made from rubber or vinyl.

The decorative layer 48 may be made from any material that presents a decorative appearance to a person within the aircraft cabin.

As should be apparent to those skilled in the art, it is common to select the materials for the first thermal insulation layer 12 and the second thermal insulation layer 14 to ensure that the cabin is comfortable to a person by providing a suitable thermal barrier between the aircraft cabin and the ambient environment. As also should be apparent to those skilled in the art, it is equally desirable to position a suitable acoustic barrier between the aircraft cabin and the ambient environment. The acoustic barrier helps to minimize noise within the cabin of the aircraft.

It is known that a mas layer, when placed between a source of noise and a person, will absorb some wavelengths of sound and, therefore, will reduce the magnitude of noise passing therethrough. In an aircraft, it is typical for the mass layer 46 to be incorporated into the interior panel 16. This construction is illustrated in Fig. 1.

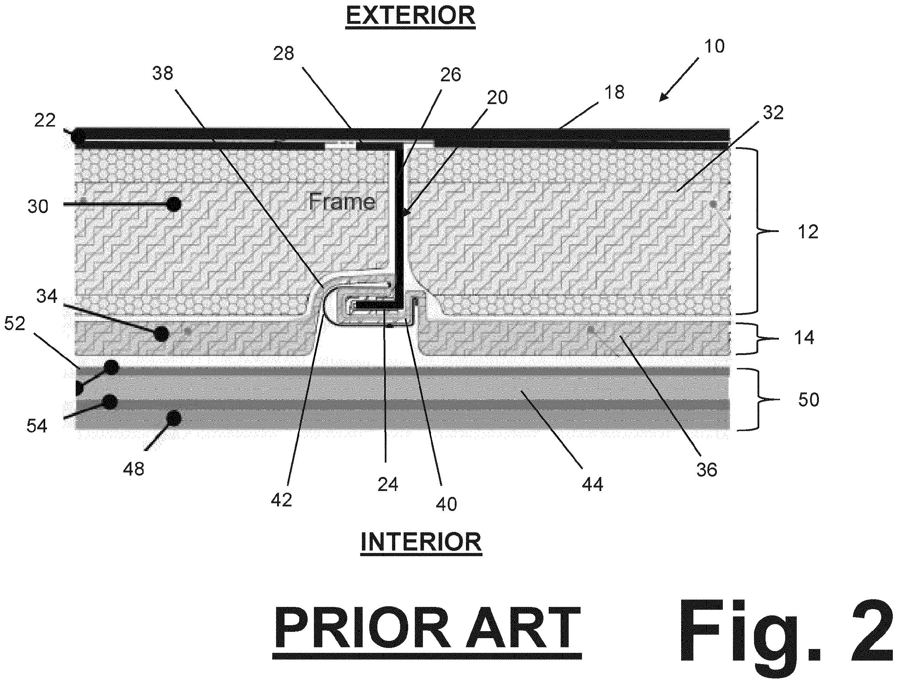

Fig. 2 illustrates a second construction of a thermo-acoustic system 50 that is known in the prior art. The thermo-acoustic system 50 illustrated in Fig. 2 differs from the thermo-acoustic system 10 illustrated in Fig. 1 with respect to the construction of the interior panel 52. Specifically, the interior panel 52 incorporates a first mass layer 54 and a second mass layer 56. More specifically, the interior panel 52 is constructed such that the absorptive layer 44 is sandwiched between the first mass layer 54 and the second mass layer 56, with the first mass layer 54 being disposed on the exterior surface of the absorptive layer 44.

As should be apparent from the foregoing, the prior art highlights that the mass layer 46, 54, 56 is typically incorporated into the interior panel 16, 52.

The present invention recognizes one aspect discovered in relation to the positioning of the mass layer 46, 54, 56 in the interior panel 16, 52. Specifically, it has been discovered that noise may be reduced or abated to a larger extent than made possible by the prior art thermo-acoustic systems illustrated in Figs. 1 and 2 if the mass layer 46, 54, 56 is relocated from a position in the interior panel 16, 52. More specifically, it has been discovered that noise transmission may be reduced if a mass layer is selected with specific properties and if the mass layer is located at a position between the interior panel 16, 52 and the fuselage 18 of the aircraft.

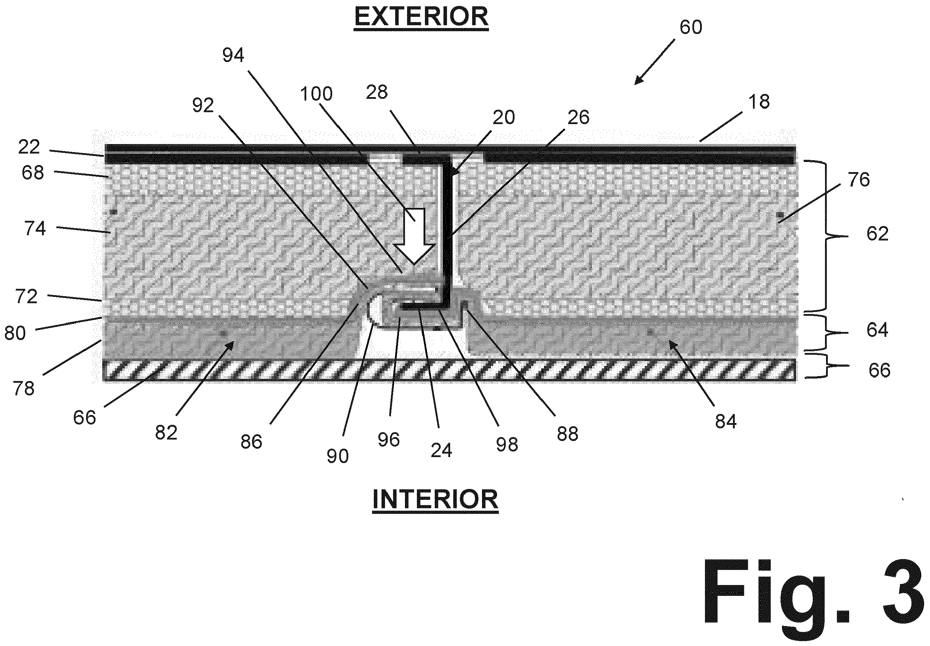

Fig. 3 illustrates one contemplated embodiment of a thermo-acoustic system 60 according to the present invention.

Like the thermo-acoustic system 10, the thermo-acoustic system 60 of the present invention includes three primary features: (1) a first insulation layer 62, (2) a second insulation layer 64, and (3) an interior panel 66.

The first insulation layer 62 is contemplated to be similar to the first thermal insulation layer 12. Specifically, the first insulation layer 62 is contemplated to be a thermal insulation layer that is made from a fiberglass and/or foam material.

In the illustrated embodiment, the first insulation layer 62 includes a first foam layer 68, a fiberglass layer 70, and a second foam layer 72. As shown, the fiberglass layer 70 is sandwiched between the first foam layer 68 and the second foam layer 72. This construction should not be understood to limit the present invention, as other constructions for the first insulation layer 62 also are contemplated for the thermo-acoustic system 60.

As discussed in connection with the first thermal insulation layer 12, the first insulation layer 62 encompasses a first batt 74 and a second batt 76, which are positioned on either side of the first frame element 20. While only two batts 74, 76 are illustrated, the first thermal insulation layer 62 includes a plurality of batts that are disposed adjacent to the interior surface of the fuselage 18.

The second insulation layer 64 combines a thermal insulation layer 78 with a mass layer 80.

The thermal insulation layer 78 is contemplated to be constructed from a fiberglass material.

The fiberglass material is contemplated to be a nonwoven fiberglass web. However, it is also contemplated that the fiberglass material may be a woven material or a hybrid construction incorporating woven and nonwoven components.

The mass layer 80 is contemplated to be made from rubber or silicone. Other materials also may be employed without departing from the scope of the present invention.

Parameters relevant to the selection of the material for the mass layer include, but are not limited to, flexibility, good sound absorption (or attenuation), and at least moderate rigidity. Flexibility of the mass layer 80 facilitates installation of the second insulation layer 64 in the aircraft. As noted above, the mass layer 80 is provided to reduce the transmission of sound therethrough. Therefore, the material selected for the mass layer 80 is selected to provide good sound absorption and/or attenuation. Still further, so that the second insulation layer 64 may be installed in the aircraft interior before installation of the interior panel 66, it is desirable for the mass layer 80 to exhibit at least a moderate degree of rigidity. Some rigidity will discourage the mas layer 80 from succumbing to the force of gravity. If the insulation layer 64 sags too much, the insulation layer 64 could interfere with the installation of the interior panels 66. For this reason, therefore, it is preferred that the mass layer 80 possess at least moderate rigidity.

According to one embodiment, the mass layer 80 is contemplated to have a weight distribution of about 0.4 lb/ft² (16.86 g/m²). This weight distribution may be varied within a range of ± 10-20% of 0.4 lb/ft² (16.86 g/m²). As such, in one variation, the range for the weight distribution is 0.4 lb/ft² (16.86 g/m²) ± 10%, which calculates to a range of about 0.36 - 0.44 lb/ft² (15.17 - 18.54 g/m²). In another variation, the range for the weight distribution is 0.4 lb/ft² (16.86 g/m²) ± 15%, which calculates to a range of about 0.34 - 0.46 lb/ft² (14.33 - 19.38 g/m²). In still another variation, the range for the weight distribution is 0.4 lb/ft² (16.86 g/m²) ± 20%, which calculates to a range of about 0.32 - 0.48 lb/ft² (13.48 - 20.23 g/m²).

Being made from fiberglass, the thermal insulation layer 78 is not contemplated to contribute appreciably (or significantly) to the weight distribution of the second insulation layer 64, which combines the thermal insulation layer 78 with the mass layer 80. Accordingly, the second insulation layer 64 is understood to satisfy the same weight distribution ranges enumerated above. Specifically, the second insulation layer 64 is contemplated to has a weight distribution of about 0.4 lb/ft² (16.86 g/m²) ± 10-20%.

With continued reference to Fig. 3, it is contemplated that the mass layer 80 may be connected to the thermal insulation layer 78 by extruding the mass layer onto the thermal insulation layer 78. Since the thermal insulation layer 78 is contemplated to comprise nonwoven fiberglass, the molten mass layer 80 will capture portions of the glass fibers, thereby connecting the two layers to one another. Still further, one or more techniques may be employed to bond the mass layer 80 to the thermal insulation layer 78, as should be apparent to those skilled in the art. For example, the mass layer 80 may be attached to the thermal insulation layer 78 by thermal and/or ultrasonic bonding at discrete points. In this embodiment, the mass layer 80 may be heated, via ultrasonic excitation or a heating element, at specific points, thereby melting the mass layer 80, permitting the mass layer to adhere to some of the glass fibers. Still further, the mass layer 80 may be connected to the thermal insulation layer 78 via a suitable adhesive. It is also contemplated that the mass layer 80 may not be adhered or connected to the thermal insulation layer 78.

As illustrated in Fig. 3, the second insulation layer 64 includes a first blanket 82 and a second blanket 84. As should be apparent to those skilled in the art, the second insulation layer 64 is expected to comprise a plurality of blankets in addition to the illustrated first blanket 82 and second blanket 84. The first blanket 82 includes a first blanket edge 86. Similarly, the second blanket 84 includes as second blanket edge 88. The first blanket edge 86 and the second blanket edge 88 are folded over the interior leg 24 of the first frame element 20 and are connected to the first frame element 20 by a clip 90.

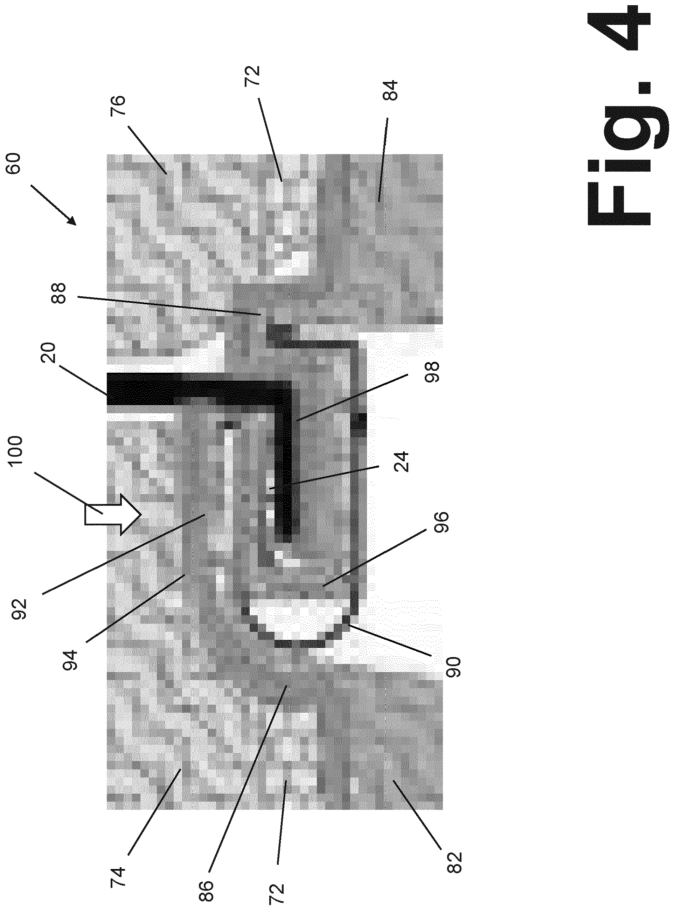

Fig. 4 is an enlarged view of the clip 90, the first blanket edge 86, and the second blanket edge 88. As highlighted in this illustration, the first blanket edge 86 includes a first insulation edge portion 92 and a first mass layer edge portion 94. Similarly, the second blanket edge 88 includes a second insulation edge portion 96 and a second mass layer edge portion 98. The first blanket edge 86 is secured by the clip 90 against the exterior surface of the interior leg 24 of the first frame element 20. In addition, the clip 90 secures the second blanket edge 88 against the interior surface of the interior leg 24. In so doing, the first blanket edge 86 and the second blanket edge 88 provide a continuous insulation layer adjacent to the interior leg 24 of the first frame element 20 to discourage and/or prevent the migration of sound and/or temperature therethrough. In the illustration, the arrow 100 provides an indication of the travel direction of sound through the thermo-acoustic system 60. The arrow 100 also provides an indication of a temperature gradient across the thickness of the thermo-acoustic system.

Fig. 3 also illustrates the interior panel 66. As shown, the interior panel 66 is positioned against the interior surface of the second insulation layer 64. The interior panel 66 incorporates decorative elements for the aircraft cabin.

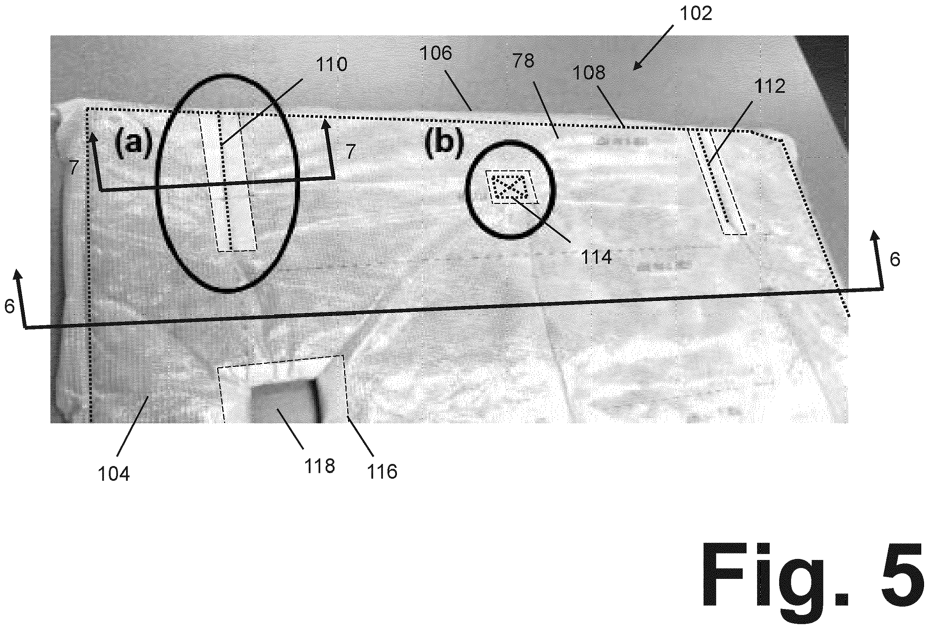

Fig. 5 is a perspective illustration an interior side of a portion of a first embodiment of a thermo-acoustic insulation module 102 employed in the thermo-acoustic system 60 illustrated in Figs. 3 and 4. The thermo-acoustic insulation module 102 is a representative example of one contemplated embodiment and should not be understood to be limiting of the present invention.

The thermo-acoustic module 102 comprises an envelope 104 that encapsulates the thermal insulation layer 78 and the mass layer 80. In Fig. 5, the interior side of the thermal insulation layer 78 is shown, face-up.

The envelope 104 is contemplated to be made from a suitable plastic or thermoplastic material, as should be apparent to those skilled in the art. The envelope 104 is provided to minimize absorption and/or retention of moisture by the thermal insulation layer 78 and/or the mass layer 80. In one contemplated embodiment, the envelope 104 does not permit moisture to pass therethrough. In another contemplated embodiment, the envelope 104 may permit moisture to pass therethrough, at least to some degree, to maintain a suitable humidity within the envelope 104.

With continued reference to Fig. 5, the envelope 104 has a peripheral edge 106 that is defined by a peripheral seam 108. While the peripheral edge 106 is illustrated as being offset from the peripheral seam 108, the peripheral edge 106 and the peripheral seam 108 may be co-located. The peripheral seam 108 may be created via thermal and/or ultrasonic bonding. Still other bonding techniques may be employed without departing from the scope of the present invention.

The thermo-acoustic module 102 includes a first localized seam 110 that extends a first predetermined distance from the peripheral edge 106 into the interior of the thermo-acoustic module 102. Still further, the thermo-acoustic module 102 includes a second localized seam 112 that extends a second predetermined distance from the peripheral edge 106 into the interior of the thermo-acoustic module 102. The first localized seam 110 and the second localized seam 112 are contemplated to be constructed via stitching that extends through the thermo-acoustic module 102 from the interior surface to the exterior surface. The first localized seam 110 and the second localized seam 112 are contemplated to provide structural stability to the thermo-acoustic module 102, which may assist with installation of the thermo-acoustic module 102 in the aircraft. In addition, the first localized seam 110 and the second localized seam 112 are contemplated to provide stability to the thermo-acoustic module 102 to help retain the shape of the thermo-acoustic module 102 when connected to the first frame element 20.

While the thermo-acoustic module 102 is shown with the first localized seam 110 and the second localized seam 112, the thermo-acoustic module 102 may include any number of localized seams. Still further, the localized seams may extend across the thermo-acoustic module 102 from one location on the peripheral seam 108 to another location on the peripheral seam 108. Alternatively, it is contemplated that embodiments of the thermo-acoustic module 102 may not incorporate any localized seams 110, 112 at all.

As also illustrated in Fig. 5, the thermo-acoustic module 102 may include a third localized seam 114, which is structured as a box with an "X" in its interior. As with the other localized seams 110, 112, the third localized seam 114 is contemplated to provide structural stability to the thermo-acoustic module 102 to facilitate installation of the thermo-acoustic module 102 against the first insulation layer 62.

The thermo-acoustic module also may include a fourth localized seam 116. Here, the fourth localized seam 116 surrounds an opening 118 through the thermo-acoustic module 102. The opening 118 may be provided so that conduits, for example, may pass through the thermo-acoustic module 102.

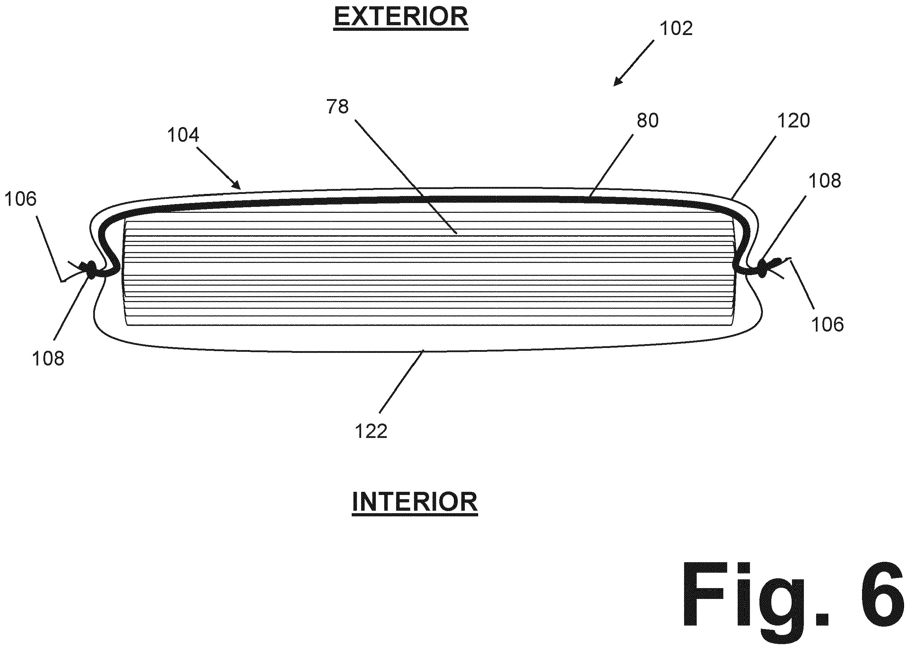

Fig. 6 is a cross-section of the thermo-acoustic insulation module 102 illustrated in Fig. 5, the cross-section being taken along line 6-6. The envelope 104 is shown with an exterior encapsulating sheet 120 and an interior encapsulating sheet 122 that are connected together at the peripheral seam 108. As discussed above, the mass layer 80 is positioned adjacent to the exterior surface of the thermal insulation layer 78.

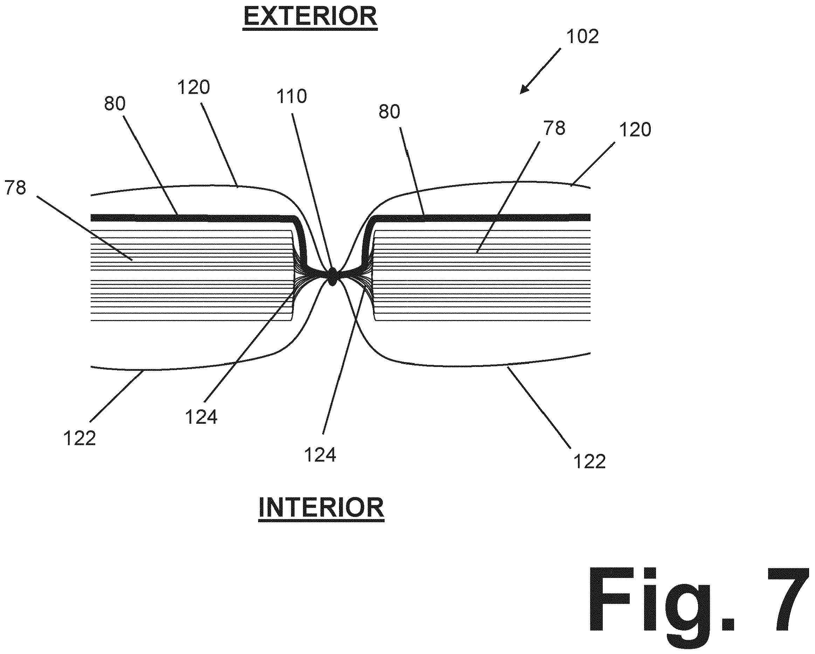

Fig. 7 is a cross-section of the thermo-acoustic insulation module 102 illustrated in Fig. 5, the cross-section being taken along line 7-7. In this view, the first localized seam 110 is illustrated. Because the first localized seam 110 compresses the thermal insulation layer 78 and the mass layer 80, the thermal insulation layer 78 exhibits two compressed regions 124.

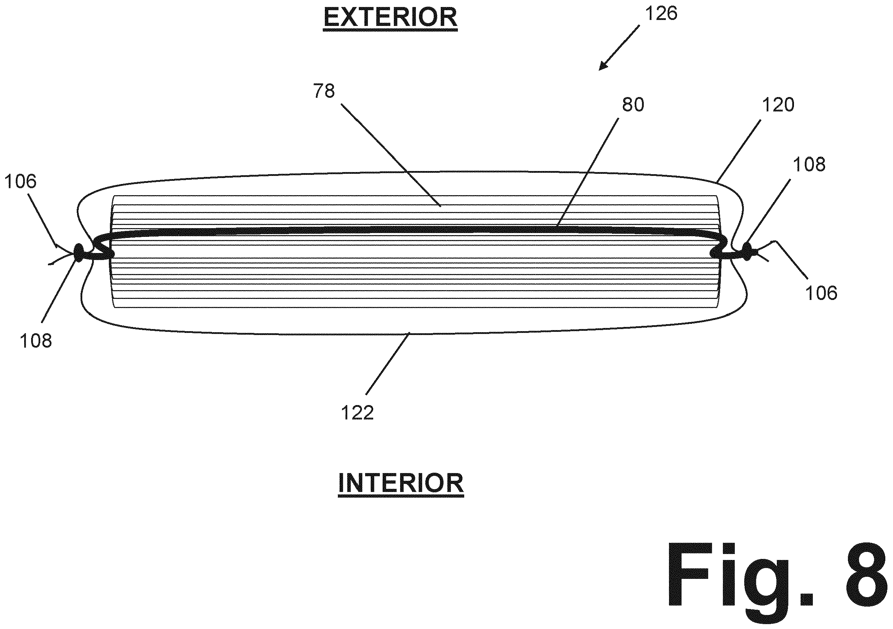

Fig. 8 is a cross-section of a second contemplated embodiment of the thermo-acoustic insulation module 126 illustrated in Fig. 5. In this second embodiment, the mass layer 80 is disposed at an intermediate position between the exterior surface of the thermal insulation layer 78 and the interior surface of the thermal insulation layer 78.

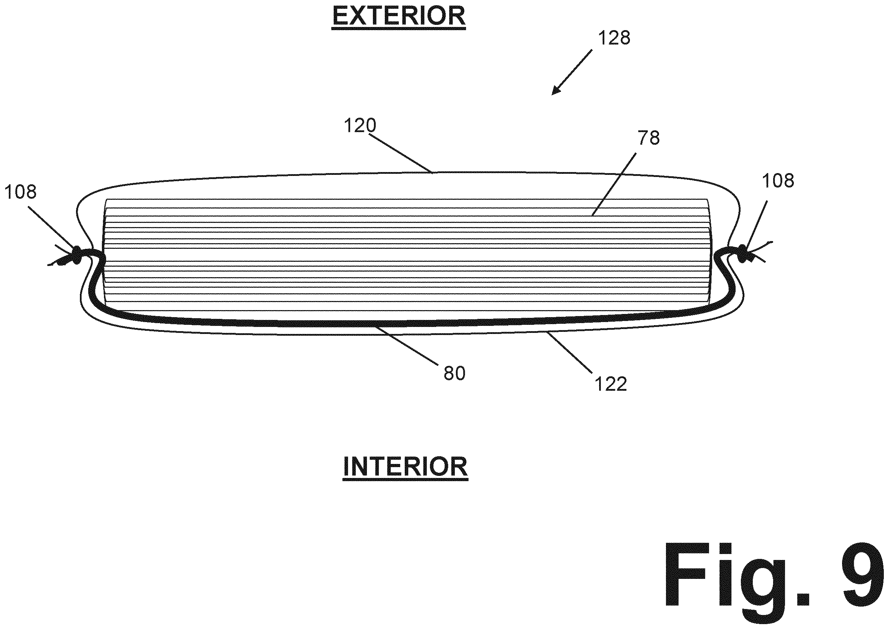

Fig. 9 is a cross-section of a third contemplated embodiment of the thermo-acoustic insulation module 128 illustrated in Fig. 5. In this third embodiment, the mass layer 80 is disposed adjacent to the interior surface of the thermal insulation layer 78.

With respect to the three embodiments of the thermo-acoustic insulation module 102, 126, and 128, it is contemplated that the most suitable embodiment may be the thermo-acoustic insulation module 102. It has been discovered that sound attenuation increases as the distance between the mass layer 80 and the interior panel 66 increases. In other words, as the mass layer 80 is moved closer to the interior surface of the fuselage 18, sound attenuation improves.

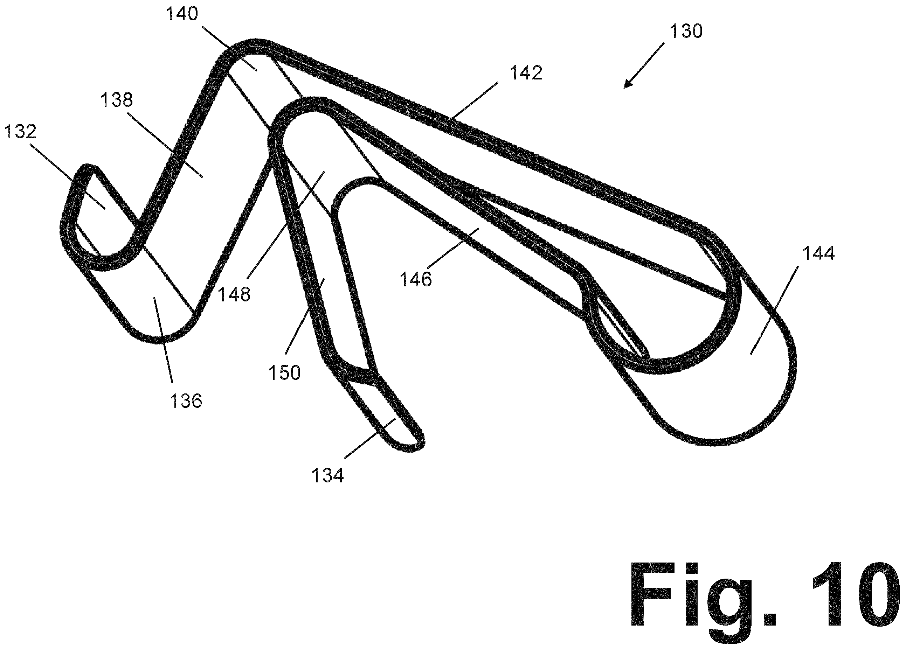

Fig. 10 is a perspective illustration of one embodiment of a clip 130 according to the present invention.

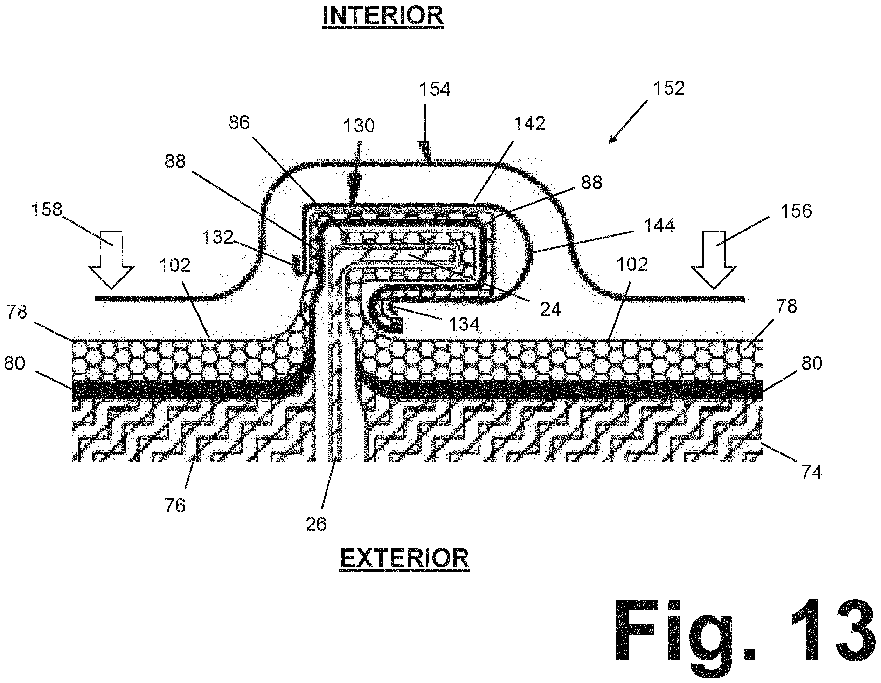

The clip 130 is made as an integral unit from a suitable material such as metal. The clip 130 includes a first end 132 and a second end 134. Between the first end 132 and the second end 134, the clip 130 includes a first bend 136, a first straight segment 138, a second bend 140, a second straight segment 142, a third bend 144, a third straight segment 146, a fourth bend 148, and a fourth straight segment 150. The clip 130 essentially forms an R-shaped structure that is deployed as illustrated in Fig. 13.

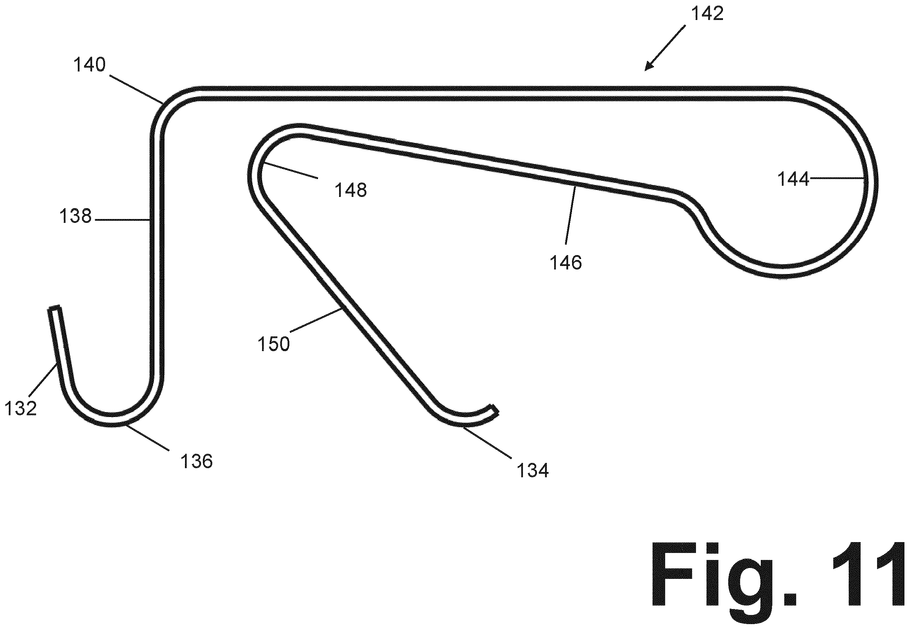

Fig. 11 is a top view of the clip illustrated in Fig. 10.

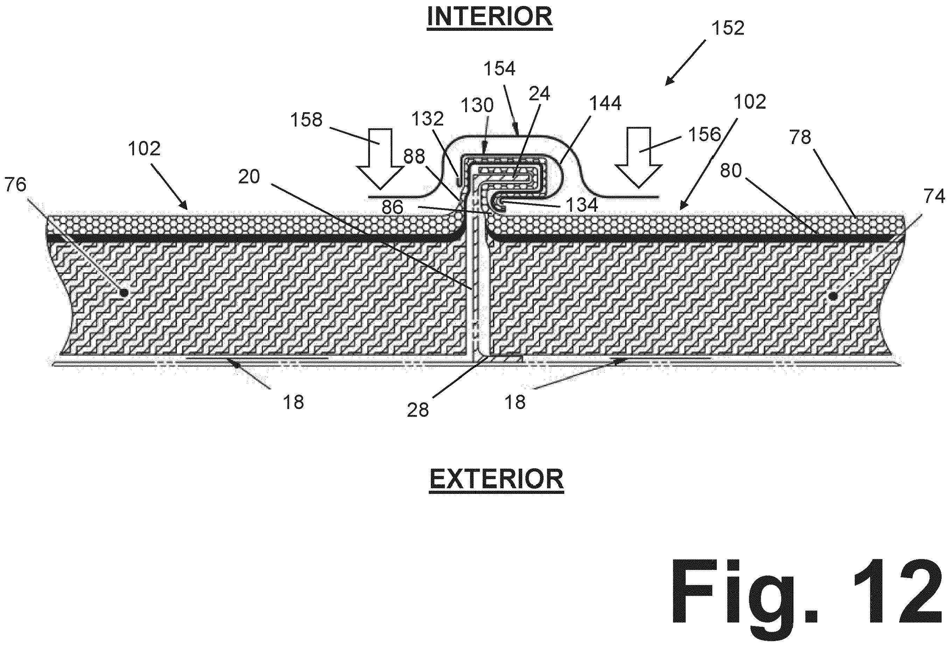

Fig. 12 is a graphical cross-section of the thermo-acoustic system 152 of the present invention where the thermo-acoustic insulation modules 102 are connected to the aircraft frame using the clip 130 illustrated in Fig. 10. To cover the clip 130, an adhesive strip 154 is applied atop the clip 130. The adhesive strip 154 is pressed against the thermo-acoustic modules 102 and the clip 130 in the direction of the arrows 156, 158.

Fig. 13 is an enlarged, graphical cross-section of the thermo-acoustic system 152 of the present invention illustrated in Fig. 12, showing the clip 130 in the installed position, in an enlarged detail.

As noted above with respect to Fig. 4, the clip 130 secures the first blanket edge 86 and the second blanket edge 88 against the interior leg 24 of the first frame element 20 in a manner that maintains a suitable thermal and acoustic barrier between the aircraft cabin and the ambient environment. Specifically, as noted, both the thermal insulation layer 78 and the mass layer 80 are secured against the interior leg 24 of the first frame member 24. As a result of this construction, there are no insulation gaps created by the presence of the first frame element 20. As such, the present invention provides for a construction that avoids (or at least minimizes) localized areas where there may be inadequate insulation, thereby negatively affecting passenger comfort.

As indicated above, the present invention may be implemented in any of a number of configurations without departing from the scope thereof. Any and all equivalents and variations that should be apparent to those skilled in the art are intended to be encompassed by the present invention.

## Claims

1. A thermo-acoustic insulation module (102) for an aircraft, comprising:
a fiber batt (78) defining an exterior side, an interior side, a thickness between the exterior side and the interior side, and a periphery;
a mass layer (80) disposed at least
on the exterior side of the fiber batt,
on the interior side of the fiber batt, or
between the exterior side and the interior side of the fiber batt;
an exterior encapsulating sheet (120) disposed exteriorly to the exterior side of the fiber batt;
an interior encapsulating sheet (122) disposed interiorly to the interior side of the fiber batt; and
a peripheral seam (108) connecting the exterior encapsulating sheet to the interior encapsulating sheet adjacent to the periphery of the fiber batt, thereby creating an envelope (104) encapsulating the fiber batt (78).

2. A thermo-acoustic insulation system (60) for an aircraft, comprising:
a first frame element (20) connected to the fuselage (18), the first frame element (20) comprising an interior leg (24);
a fiber batt (74, 76) defining an exterior side, an interior side, a thickness between the exterior side and the interior side, and a periphery;
a mass layer (80) disposed at least
on the exterior side of the fiber batt,
on the interior side of the fiber batt, or
between the interior side and the exterior side of the fiber batt;
an exterior encapsulating sheet (120) disposed exteriorly to the exterior side of the fiber batt;
an interior encapsulating sheet (122) disposed interiorly to the interior side of the fiber batt;
a peripheral seam (108) connecting the exterior encapsulating sheet (120) to the interior encapsulating sheet (122) adjacent to the periphery of the fiber batt, thereby creating an envelope (104) encapsulating the fiber batt and defining a blanket edge (86) adjacent to the peripheral seam (108); and
a clip (90) securing the blanket edge to the interior leg (24) of the first frame element (20).

3. A thermo-acoustic insulation module (102) as claimed in claim 1 or a thermo-acoustic insulation system (60) as claimed in claim 2, wherein the fiber batt (74, 76, 78) comprises a fiberglass nonwoven mat.

4. A thermo-acoustic insulation module (102) as claimed in claim 1 or claim 3 or a thermo-acoustic insulation system (60) as claimed in claim 2 or claim 3, wherein the mass layer (80) comprises rubber.

5. A thermo-acoustic insulation module (102) as claimed in any of claims 1, 3 or 4 or a thermo-acoustic insulation system (60) as claimed in any of claims 2-4, wherein the exterior encapsulating sheet (120) is plastic.

6. A thermo-acoustic insulation module (102) as claimed in any of claims 1 or 3-5 or a thermo-acoustic insulation system (60) as claimed in any of claims 2-5, wherein the interior encapsulating sheet (122) is plastic.

7. A thermo-acoustic insulation module (102) as claimed in any of claims 1 or 3-6 or a thermo-acoustic insulation system (60) as claimed in any of claims 2-6, wherein the peripheral seam (108) extends completely around the periphery of the fiber batt (74, 76, 78).

8. A thermo-acoustic insulation module (102) as claimed in any of claims 1 or 3-7 or a thermo-acoustic insulation system (60) as claimed in any of claims 2-7, comprising a first localized seam (110) extending a first predetermined distance into the fiber batt from the periphery (106).

9. A thermo-acoustic insulation module (102) or a thermo-acoustic insulation system (60) as claimed in claim 8, further comprising a second localized seam (112) extending a second predetermined distance into the fiber batt from the periphery (106).

10. A thermo-acoustic insulation module (102) or a thermo-acoustic insulation system (60) as claimed in claim 9, further comprising a third localized seam (114) surrounding an area in the fiber batt inside of the periphery.

11. A thermo-acoustic insulation module (102) or a thermo-acoustic insulation system (60) as claimed in claim 10, wherein the third localized seam (114) surrounds an opening (118) through the fiber batt.

12. An aircraft comprising a thermo-acoustic insulation module (102) as claimed in any of claims 1 or 3-11 or comprising a thermo-acoustic insulation system (60) as claimed in any of claims 2-11.

13. An aircraft, comprising:
a fuselage (18);
a first frame element (20) connected to the fuselage (18), the first frame element (20) comprising an interior leg (24);
a fiber batt (74, 76, 78) defining an exterior side, an interior side, a thickness between the exterior side and the interior side, and a periphery;
a mass layer (80) disposed at least
on the exterior side of the fiber batt,
on the interior side of the fiber batt, or
between the interior side and the exterior side of the fiber batt;
an exterior encapsulating sheet (120) disposed exteriorly to the exterior side of the fiber batt;
an interior encapsulating sheet (122) disposed interiorly to the interior side of the fiber batt;
a peripheral seam (108) connecting the exterior encapsulating sheet (120) to the interior encapsulating sheet (122) adjacent to the periphery of the fiber batt, thereby creating an envelope (104) encapsulating the fiber batt and defining a blanket edge (86) adjacent to the peripheral seam (108); and
a clip (90) securing the blanket edge to the interior leg (24) of the first frame element (20).

14. An aircraft as claimed in claim 13, wherein the fiber batt (74, 76, 78) comprises a fiberglass nonwoven mat and/or wherein the mass layer (80) comprises rubber.

15. An aircraft as claimed in claim 13 or claim 14, wherein the exterior encapsulating sheet (120) and/or the interior encapsulating sheet (122) is plastic.
